# FASCICULE DE BREVET EUROPEEN

(11) **EP 1 712 390 B1**
(45) Date de publication et mention de la délivrance du brevet: **16.06.2010**
(21) Numéro de dépôt: 06290595.5
(22) Date de dépôt: 12.04.2006
(51) Int. Cl.: B60J 7/14, B60J 7/19, B60J 7/185

(54) **Toit mobile pour véhicule découvrable et véhicule ainsi équipé**
Faltdach für ein KFZ und dazugehöriges KFZ
Foldable roof for a vehicle and vehicle with such a roof

(30) Priorité: 13.04.2005 FR 0503703
(43) Date de publication de la demande: 18.10.2006
(73) Titulaire: Heuliez, 79142 Cerizay Cedex (FR)
(72) Inventeur: Guillez, Jean-Marc, 79140 Cirières (FR); Queveau, Paul, 79140 Montravers (FR); Queveau, Gérard, 79140 Le Pin (FR)
(74) Mandataire: Pichat, Thierry

(56) Documents cités:
- EP-A- 0 884 208
- DE-A1- 10 242 725
- DE-C1- 19 507 431
- DE-C1- 19 635 869
- DE-C1- 19 950 537
- FR-A- 2 695 081
- FR-A- 2 791 007
- FR-A- 2 814 402
- FR-A- 2 820 692
- US-A1- 2004 056 507

## Description

La présente invention concerne, sur tout type de véhicule, un toit mobile rigide par rapport à la caisse de ce véhicule.

Les toits d'un véhicule convertible sont en particulier concernés. Les véhicules en eux-même le sont également.

Ainsi le véhicule peut-être un pick-up équipé d'un tel toit, ce véhicule étant transformable, en berline, coupé deux ou quatre places et cabriolet deux ou quatre places.

De FR-A-2 791 007, on connaît ainsi un toit mobile sur un véhicule convertible, dans lequel l'élément avant de toit est articulé à chacun des éléments latéraux arrière de toit, suivant un premier axe transversal et ces éléments latéraux arrière de toit sont articulés à la caisse du véhicule suivant un deuxième axe transversal, des moyens de verrouillage avant et arrière et leur/leurs actionneur/actionneurs étant prévus pour verrouiller entre eux, respectivement, une partie avant de l'élément avant de toit avec une première partie avant de la caisse du véhicule, et une partie arrière dudit élément avant de toit avec une partie avant desdits éléments latéraux de toit arrière, dans l'état déployé du toit.

DE-A-102 42 725 concerne également un véhicule convertible à (éléments de) toit rigide(s).

Un but de la présente invention est de créer une nouvelle réalisation d'un toit mobile, adaptable, si nécessaire, sur différent types de véhicule et ayant une cinématique et/ou des mécanisme(s) ou moyens de verrouillage performants, fiables et compatibles avec une production du véhicule en série.

Un autre but de l'invention est de créer un véhicule équipé du toit ci-dessus pouvant être transformé en plusieurs versions.

Dans ces conditions, suivant l'invention, une solution proposée consiste en ce que l'élément avant de toit renferme lesdits mécanismes et moyens de verrouillage avant et arrière et leur/leurs actionneur/actionneurs et l'élément de toit arrière central est articulé au bord arrière de l'élément avant de toit suivant un axe transversal.

Favorablement :
- un élément transversal reliera les éléments latéraux arrière du toit, comme indiqué dans les revendications annexées 2 ou 3,
- un verrouillage du toit, rangé derrière l'habitacle, de préférence une fois plié, s'opérera comme indiqué dans les revendications annexées 5 à 12, ou, plus généralement, le verrouillage du toit pourra s'opérer comme en revendication 4,
- et/ou on réalisera un verrouillage entre l'élément de toit arrière central et chacun des éléments latéraux de toit arrière, transversalement à la direction longitudinale et dans l'état déployé des différents éléments toit, comme indiqué dans les revendications annexées 13 et 14.

Pour tout détail de description, on se reportera à ces revendications.

Concernant les caractéristiques desdites revendications 4 à 14, on notera encore qu'elles pourraient faire l'objet d'au moins une protection indépendante en ce qu'elles définissent en elles-mêmes au moins une invention, à savoir en particulier :
- les mécanismes de verrouillage avant et arrière et leur/leurs actionneur/actionneurs verrouillent, de préférence, entre eux respectivement la partie avant de l'élément avant de toit avec une deuxième partie de la caisse du véhicule située dans une zone de rangement du toit où les éléments de toit sont alors pliés, et, soit, ladite partie arrière ce même élément avant de toit, soit ladite partie avant desdits éléments latéraux de toit arrière avec la caisse du véhicule, à proximité de cette deuxième partie de caisse, et/ou
- les mécanismes de verrouillage arrière comprennent un organe de verrouillage monté pivotant vers la partie arrière de l'élément de toit avant, et/ou
- l'organe de verrouillage pivote par l'action d'une pièce montée coulissante sur l'élément de toit avant, et/ou
- la pièce coulissante est déplacée grâce à une prise de mouvement provenant de l'organe de verrouillage avant, et/ou
- l'organe de verrouillage monté pivotant présente un évidement qui vient engager un doigt solidaire d'un élément latéral du premier élément de toit arrière, lors du verrouillage, et/ou
- ladite pièce montée coulissante présente une extrémité dont la forme vient s'engager avec un organe de verrouillage de forme complémentaire solidaire de la deuxième partie de la caisse, et/ou
- l'élément de toit avant porte au voisinage des mécanismes de verrouillage arrière une pièce proéminente venant, vers la fin du pliage du toit, en appui sur une surface de guidage solidaire de ladite deuxième partie de la caisse et permettant le positionnement du toit par rapport cette derenière, avant d'effectuer le verrouillage, et/ou
- le toit plié est posé sur la caisse par l'intermédiaire de la pièce proéminente, et/ou
- pour verrouiller l'élément de toit arrière central avec chacun des éléments latéraux de toit arrière rigides, transversalement à ladite direction longitudinale et dans l'état déployé des éléments de toit, les éléments cités comprennent respectivement des moyens complémentaires de verrouillage latéraux qui s'engagent naturellement les uns dans les autres et se verrouillent mutuellement de par le mouvement relatif de l'élément de toit arrière central par rapport aux éléments latéraux de toit, vers la fin d'un mouvement de déploiement du toit, et/ou
- les moyens complémentaires de verrouillage sont constitués d'organes en forme de fourchette à deux dents solidaires de l'un desdits d'éléments de toit et d'au moins un doigt solidaire de l'autre de ces éléments de toit, le doigt venant s'insérer dans la fourchette vers la fin du mouvement de déploiement du toit, et/ou
- latéralement, l'élément de toit central arrière se verrouille de façon libérable avec chacun des éléments latéraux arrière de toit par l'intermédiaire d'au moins un dispositif à pion transversal et à rainure respectivement portés par l'un et l'autre entre les éléments latéraux arrière de toit et l'élément de toit central arrière, lors de la fin du mouvement relatif d'articulation entre ces éléments de toit, dans le sens du déploiement desdits éléments vers le dessus de l'habitacle,

Différents avantages sont attendus, dont :
- il ne sera pas forcément nécessaire de prévoir de mécanisme ni d'actionneur (tel que vérin) pour verrouiller ou déverrouiller entre eux l'élément de toit arrière central et l'un ou l'autre des éléments latéraux de toit arrière,
- on pourra utiliser les mêmes mécanismes de verrouillage avant et arrière de l'élément avant de toit, et leur/leurs actionneur/actionneurs pour verrouiller le toit à la caisse tant dans l'état plié des éléments de toit que dans leur état déployé.

D'autres particularités et avantages de l'invention pourront encore apparaître dans la description ci-après où les dessins annexés, donnés à titre d'exemples non limitatifs, sont tels que:
- la figure 1 montre en perspective de trois-quart arrière un véhicule convertible pourvu du toit mobile selon l'invention,
- la figure 2 est une coupe longitudinale (suivant X) du toit de la figure 1, dans son état fermé au-dessus de l'habitacle en trait plein et dans son état plié en traits mixtes, à gauche,
- la figure 3 montre une partie du même toit, toujours en coupe longitudinale, détaillant plus le système de verrouillage longitudinal porté par l'élément de toit avant,
- la figure 4 est une perspective locale de dessous montrant l'extrémité arrière du même mécanisme de verrouillage, dans l'état verrouillé (trait plein) et déverrouillé (traits mixtes), entre l'élément de toit avant et l'un des éléments latéraux arrière de toit,
- la figure 5 montre un détail en perspective de dessous à nouveau de l'extrémité arrière du même mécanisme de verrouillage longitudinal, lorsque l'élément avant de toit est rangé derrière l'habitacle (toit ouvert, habitacle découvert), et
- la figure 6 montre encore en coupe longitudinale médiane le principe du verrouillage entre l'élément arrière central de toit et l'un ou l'autre des éléments latéraux arrière.

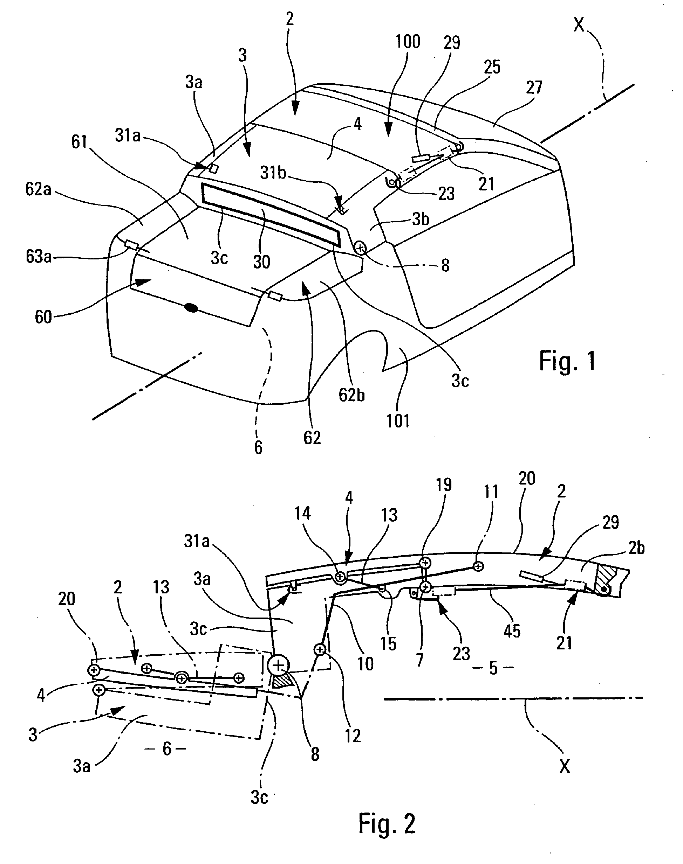

Dans la réalisation représentée aux figures et en particulier sur les figures 1 et 2, le toit mobile 100, ici escamotable, du véhicule 1 comprend un élément de toit avant rigide 2 et un élément unitaire de toit arrière rigide 3.

L'élément unitaire arrière de toit 3 comprend un élément ou panneau central rigide 4 de toit arrière et deux éléments latéraux de toit arrière rigides 3a,3b. Ces éléments 3a,3b peuvent être reliés entre eux, transversalement à ladite direction longitudinale X du véhicule, par un élément transversal arrière 3c dressé sur la largeur du véhicule à l'arrière de l'habitacle 5 qu'il ferme à cet endroit, dans l'état fermé du toit dans lequel tous les éléments de toit 2,3a,3b,3c sont déployés au dessus de cet habitacle 5, comme sur la fig.1.

L'élément transversal arrière 3c de toit comprend une lunette arrière 30.

Cet élément transversal arrière 3c et les éléments latéraux arrière 3a, 3b sont ici liés rigidement entre eux de manière à former l'unité rigide constituant donc le dit élément arrière de toit 3.

Ces éléments de toit avant et arrière 2, 3 sont mobiles entre une position dans laquelle ils s'étendent au dessus de l'habitacle 5 du véhicule 1 et une position pliée dans laquelle ces éléments 2, 3 sont ici repliés l'un sur l'autre dans le coffre arrière 6 du véhicule, sous le capot 60 de fermeture de ce coffre.

Le capot 60 peut comprendre une partie centrale 61 et une partie latérale extérieure 62 comprenant deux éléments latéraux 62a, 62b disposés de part et d'autre de la partie centrale 61 et qui pivote avec elle vers l'arrière autour des pivots 63a, 63b lors de l'ouverture du capot 60 vers l'arrière pour permettre de ranger le toit 100. A l'avant, toujours transversalement à l'axe X, le capot 60 pourrait être monté articulé pour pivoter vers l'avant afin de permettre de ranger des bagages dans le coffre.

L'élément avant de toit 2 est articulé à chacun des éléments latéraux arrière de toit 3a, 3b suivant deux tronçons d'axes colinéaires repéré 7 pour l'un d'eux sur la figure 2, compris entre les bords adjacents des éléments 2, 3a, 3b et situé sensiblement dans le prolongement de leur surface inférieure.

Chacun de ces éléments latéraux arrière est par ailleurs articulé à la carrosserie ou plus exactement à la caisse 101 du véhicule suivant un deuxième axe 8 proche du bord arrière inférieur de chaque élément 3a, 3b.

Le déplacement des deux éléments de toit 2, 3 entre les deux positions précitées est commandé de chaque côté de l'axe X par un bras pivotant 10 dont l'extrémité avant est fixée de façon articulée à l'élément avant de toit 2 suivant un troisième axe 11 situé en avant du premier axe 7.

A l'arrière le bras de commande 10 est articulé à la caisse 101 suivant un quatrième axe transversal 12 situé en avant du deuxième axe 8.

Les quatre axes précités 7, 11, 12, 8 définissent un quadrilatère déformable et sont donc transversaux à l'axe longitudinal X.

Le pivotement du bras 10 est commandé par des moyens tels qu'un vérin ou un moteur, permettant à ce bras 10 de basculer vers l'arrière suivant un angle proche de 180°, pour le pliage du toit derrière l'habitacle (voir figure 2 : traits pleins pour les éléments de toit déployés au-dessus de l'habitacle 5 et traits mixtes pour les éléments de toit repliés dans le coffre 6).

Comme montré figure 2, en position de rangement dans le coffre arrière 6, l'élément avant de toit 2 s'étend sensiblement horizontalement au-dessus des éléments arrière de toit 3, 4

Pour plus de détail, on se rapportera à la description de FR-A-2 814 402 pages 5 et 6.

On remarquera que les éléments latéraux arrière 3a, 3b présente chacun un profil latéral de forme coudée dont une partie supérieure est située latéralement dans le prolongement de l'élément avant 2 et dont l'autre partie s'étend vers le bas, dans l'état fermé du toit comme sur la figure 1.

Encore figure 2, le basculement de l'élément central arrière de toit 4 est assuré, de chaque côté de l'axe X, par un levier pivotant 13 dont une extrémité est articulée à cet élément 4, suivant un axe transversal 14 situé sous l'élément 4 et dont l'autre extrémité est montée pivotante suivant un autre axe transversal 15 solidaire du bras pivotant 10.

D'autre part, le bord avant de l'élément central arrière 4 est articulé au bord arrière de l'élément avant de toit 2, suivant un axe transversal 19.

Figure 1 et 2, on a par ailleurs schématisé, pour l'un des côtés du toit 100, les mécanismes 21, 23 de commande en verrouillage/déverrouillage (c'est-à-dire en verrouillage libérable) respectivement de l'élément de toit avant 2 vis-à-vis d'une partie avant de la caisse 101, ici la traverse supérieure 25 de la baie de pare-brise 27, et de ce même élément avant de toit vis-à-vis de l'un ou l'autre des élément latéraux arrière de toit 3a, 3b, ici l'élément latéral droit 3b.

Leur actionneur commun 29, ici un vérin, est également schématisé. On a donc compris que symétriquement, le long du bord gauche de l'élément de toit avant 2, on retrouvera les mêmes mécanismes et actionneur pour le verrouillage libérable longitudinal de cet élément de toit.
Figure 1, on voit aussi schématisés les moyens 31a, 31b de verrouillage arrière transversaux entre l'élément central arrière de toit 4 et respectivement l'un et l'autre des éléments arrière latéraux de toit 3a, 3b.

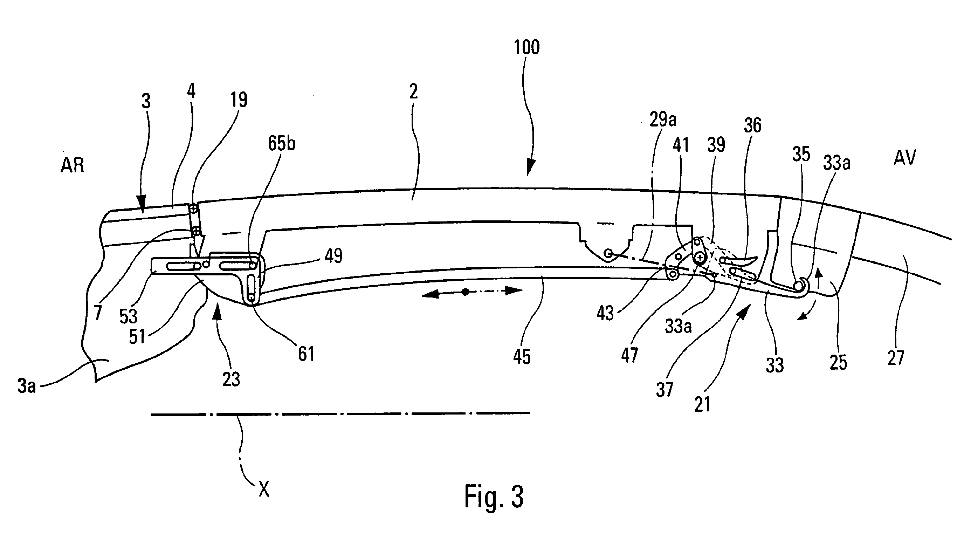

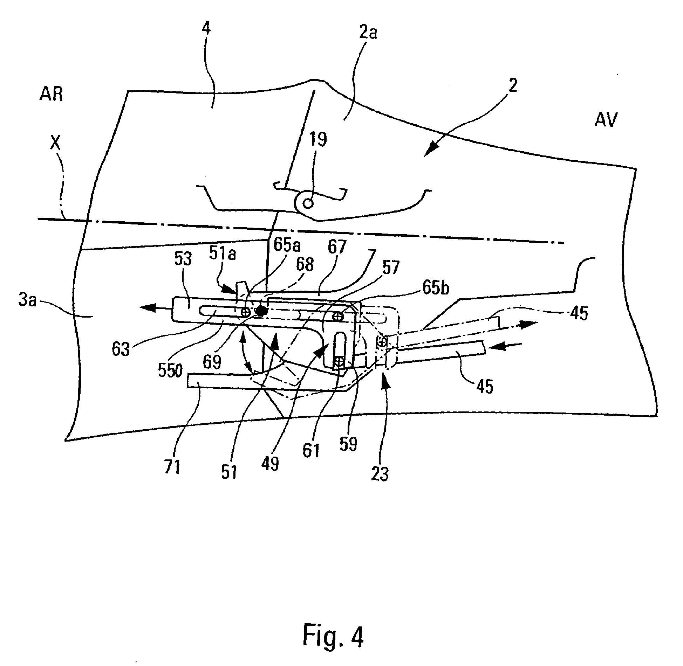

Figures 3 et 4, AV et AR repèrent respectivement l'avant et l'arrière du véhicule.
Figure 3, le toit 100 est fermé et les éléments de toit avant 2 et 3 sont affleurant entre eux comme d'ailleurs ils l'étaient sur la figure 1.

Le trait mixte 29a figure l'axe de l'actionneur précité.

A l'avant le dispositif de verrouillage 21 comprend, pour le côté illustré, une patte de verrouillage 33 dont l'extrémité avant est recourbée en crochet pour crocheter par le dessous un pion 35 fixé à la traverse 25 de baie de pare-brise.

La tige de l'actionneur agit sur la patte de verrouillage 33 pour la faire pivoter à l'arrière en 33b.

Des glissières 36, 37 guident en coulissement la patte 33 de manière quelle avance et descende pour le déverrouillage entre l'élément de toit avant 2 et la partie 25 de la caisse, le verrouillage s'effectuant en sens inverse.

Un jeu de biellettes 39, 41, 43 assure la liaison articulée entre la patte 33 de verrouillage avant et une tringle 45 de liaison entre les moyens de verrouillage 21 et 23, sur le même côté du toit.

En 47, on a repéré l'axe de pivotement du mécanisme permettant en particulier la montée et la descente du crochet 33a.

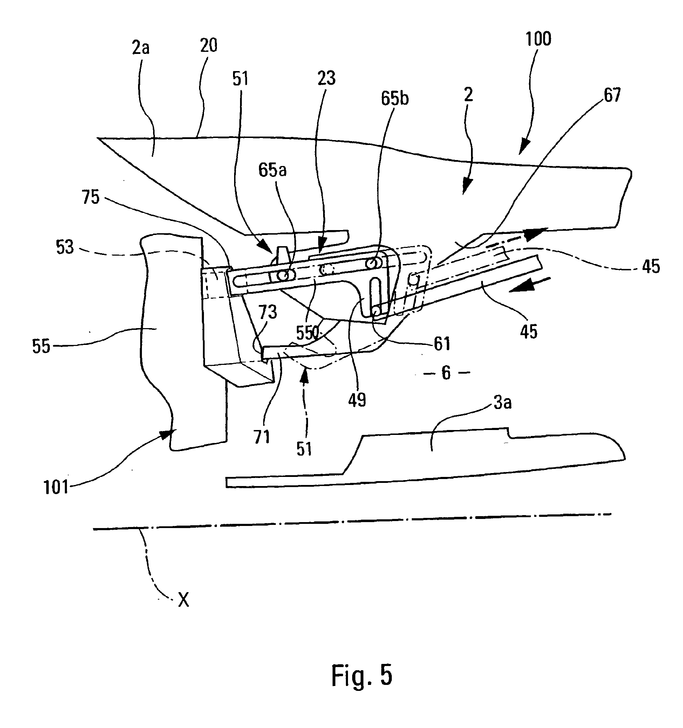

Longitudinalement, à l'arrière, le dispositif 23 de verrouillage libérable entre l'élément de toit 2 et l'un ou l'autre des élément latéraux arrière 3a ou 3b comprend une double fourchette 49, 51, la première fourchette 49 portant, à son extrémité arrière et sensiblement horizontalement, un doigt de verrouillage 53 que l'on retrouvera figure 5 pour verrouiller sensiblement axialement (donc axe X) l'élément de toit avant 2 avec une paroi dressée 55 de la zone de rangement du toit dans son état plié, ici le coffre arrière 6.

La première fourchette 49 en forme de « L » avec une branche descendante à l'avant, comprend une glissière axiale 550 terminée à l'arrière par le doigt de verrouillage 53 et, à l'avant, par un coude descendant 57 se terminant par la fourchette double 59 dans laquelle glisse un pion 61 fixé à l'extrémité arrière de la tringle de renvoi 45.

La patte ici rectiligne 550 comprend une glissière axiale 63 qui, pendant le verrouillage ou le déverrouillage coulisse axialement, guidé par les pions 65a, 65b, fixés à l'élément de toit avant 2, à l'endroit d'une excroissance descendante 67.

En 69, on voit le pion de verrouillage de la deuxième fourchette de verrouillage 51. Ce pion 69 est fixé à l'élément latéral de toit concerné, ici 3a.

Quand la tringle 45 recule axialement (flèche et trait pleins sur la figure 4), la première fourchette 49 recule, entraînant vers l'arrière le pions 53. La deuxième fourchette, qui est montée basculante autour d'un prolongement axial horizontal du pion 65b dirigé perpendiculairement à l'axe X, bascule alors vers le haut à l'endroit de son extrémité arrière en crochet ou fourchette 51a, de manière que sa rainure 68 reçoive le pion fixe de verrouillage 69, comme montré en trait plein sur la figure 4.

En sens inverse, une traction vers l'avant de la tringle 45 (traits mixtes figure 4) provoque le basculement vers le bas de la pièce 51, déverrouillant ainsi la fourchette 51a vis-à-vis du pion 69, en entraînant sensiblement horizontalement vers l'avant la patte 550 de la première fourchette 49.

Figure 4, on notera encore la présence d'une excroissance 71 solidaire de l'élément de toit avant 2 et dirigée vers l'arrière de la pièce pivotante 51 en fourchette. Cette excroissance 71, ici sensiblement horizontale, va servir dans le verrouillage de l'élément de toit avant 2 vis-à-vis de la paroi dressée 65 de la zone de rangement 6 (figure 5) lorsque les éléments de toit sont déplacés à l'écart du dessus de l'habitacle 5 et pliés comme sur la figure 2 en traits mixtes, à gauche.

Figure 5, on voit donc en perspective de dessous schématisé le verrouillage libérable de la partie arrière 2a de l'élément de toit 2 dans la zone de rangement 6, vis-à-vis d'une paroi arrière transversale 55 dressée à cet endroit et appartenant donc à la caisse 101.

Comme montré figure 2, on remarquera que, éléments de toit pliés, l'élément de toit avant 2 reste dans la même orientation que lorsqu'il est déployé au-dessus de l'habitacle 5, c'est-à-dire que sa courbure supérieure 20 demeure bombée vers le haut. L'élément de toit 2 demeure par ailleurs dans les deux cas sensiblement à l'horizontal.

Figure 5, les traits pleins montrent le mécanisme 23 verrouillé, les traits mixtes le montrant déverrouillé.

Dans cet état plié/rangé du toit, le crochet 51a de la fourchette de verrouillage 51 n'a plus de fonction. C'est l'excroissance arrière 71 qui est active en jouant le rôle de pion de centrage, dans sa position basculée vers le haut (ici sensiblement horizontale, trait plein), en s'engageant dans un orifice de centrage 73 de la paroi 55, par exemple un cône de centrage. La coopération entre l'orifice 73 et l'excroissance 71 va permettre de guidé, ici sensiblement horizontalement et sensiblement suivant l'axe X le doigt de verrouillage 53 dans un orifice récepteur 75 de la paroi 55 lors du coulissement vers l'arrière (flèche en trait plein) de la tringle 45, entraînant dans le même sens la patte 550.

Le déplacement en sens inverse (flèche en traits mixtes) de la tringle 45 entraînera le déverrouillage axiale par sortie du doigt 53 hors de son orifice de verrouillage axial 75, ceci de préférence de part et d'autre de l'axe longitudinal X, par symétrie.

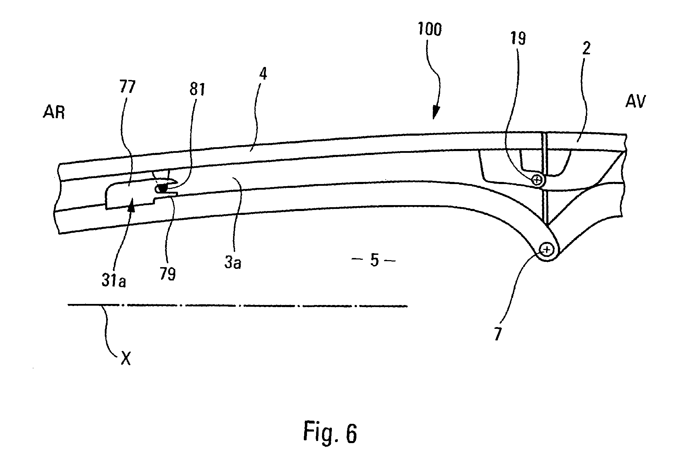

Figure 6, on voit, dans l'état fermé du toit au-dessus de l'habitacle 5, l'élément de toit central arrière 4 affleurant à l'avant l'élément de toit avant 2 et verrouillé vers l'arrière à l'élément latérale arrière de toit 3a ici figuré, à l'endroit du dispositif de verrouillage 31a.

Ce dispositif de verrouillage 31a comprend, sur l'élément latéral arrière de toit 3a, une patte dressée 77 avec une fourchette 79 à deux dents ouverte vers l'avant (AV) sensiblement suivant l'axe X et dans laquelle est engagé un pion de verrouillage 81 fixé sous l'élément central arrière de toit 4. Ce pion 81 s'étend transversalement et de préférence perpendiculairement à l'axe X.

Lors de la fermeture du toit vers le dessus de l'habitacle 5 et donc lors de l'articulation entre les différents éléments de toit, le mouvement relatif d'articulation de l'élément de toit central arrière 4 vis-à-vis de l'élément latéral arrière concerné (ici 3a) provoque un rapprochement « longitudinal » du pion 81 et de l'ouverture tournée vers l'avant de la fourchette 79 pour créer l'engagement de l'un dans l'autre et donc le verrouillage entre ces éléments de toit 4-3a (de même pour 4 et 3b).

Le déverrouillage entre 4 et 3a/3b s'opère à l'inverse, de part et d'autre de l'axe X.

Bien entendu plusieurs actionneurs tels que 29 pourraient être prévus (vérin, moteur électrique ...).

Concernant le verrouillage de la partie avant 2b de l'élément de toit avant 2 dans son état plié où il est disposé à l'endroit de la zone de rangement 6, on utilisera favorablement les moyens de verrouillage 21 pour crocheter via le crochet 33 un pion ou une tige transversal(e) prévu(e) sur une paroi frontale avant d'une paroi dressée de cette zone 6.

En variante, les éléments latéraux arrière de toit 3a, 3b et l'élément transversal arrière 3c pourraient être indépendants entre eux, et même avoir des mouvements différents, comme dans FR-A-2 791 007 (figure 1 et description correspondante). Ainsi, la lunette arrière pourrait être montée pivotante entre les et par rapport aux éléments latéraux arrière de toit 3a, 3b.

## Revendications

1. Toit mobile sur un véhicule, ce toit présentant un avant, un arrière et une direction longitudinale et comprenant un élément de toit avant (2) rigide et des éléments latéraux de toit arrière rigides (3a,3b), ces derniers étant situés de part et d'autre d'un élément de toit arrière central (4) rigide, ceci au moins dans un état déployé de tous lesdits éléments de toit (2,3,4), lesquels sont mobiles entre ledit état déployé dans lequel ils s'étendent au-dessus de l'habitacle (5) du véhicule et un état plié dans lequel ces éléments de toit (2,3,4) sont disposés à l'écart du dessus de l'habitacle, tel que dans un coffre arrière (6) du véhicule, l'élément avant de toit (2) étant articulé à chacun desdits éléments latéraux arrière de toit (3a, 3b), suivant un premier axe transversal (7) et ces éléments latéraux arrière de toit étant articulés à la caisse du véhicule suivant un deuxième axe transversal (8), des moyens de verrouillage avant et arrière (21, 23) et leur/leurs actionneur/actionneurs (29) étant prévus pour verrouiller entre eux, respectivement, une partie avant de l'élément avant de toit (2) avec une première partie avant (25) de la caisse du véhicule, et une partie arrière dudit élément avant de toit (2) avec une partie avant desdits éléments latéraux de toit arrière (3a,3b), dans ledit état déployé,
**caractérisé en ce que** l'élément avant de toit (2) renferme lesdits mécanismes et moyens de verrouillage avant et arrière (21, 23) et leur/leurs actionneur/actionneurs (29) et l'élément de toit arrière central (4) est articulé au bord arrière de l'élément avant de toit (2) suivant un axe transversal (19).

2. Toit selon la revendication 1, **caractérisé en ce que** les éléments latéraux arrière (3a, 3b) du toit sont reliés entre eux transversalement à l'axe longitudinal (X) par un élément transversal arrière de toit (3c), dressé entre le niveau du capot (60, 61, 62a, 62b) de coffre arrière et l'élément central arrière de toit (4), dans l'état déployé des éléments de toit (2, 3, 4), pour définir un élément unitaire de toit arrière (3).

3. Toit selon la revendication 2, **caractérisé en ce que** l'élément transversal arrière dressé (3c) porte une lunette arrière (30), pour la rétrovision.

4. Toit selon l'une des revendications précédentes, **caractérisé en ce que** :
- les moyens de verrouillage avant et arrière (21, 23) de l'élément avant de toit (2) comprennent chacun un crochet (33,51a) basculant, pour le verrouillage dans l'état déployé,
- et/ou les moyens de verrouillage arrière (21, 23) de l'élément avant de toit (2) comprennent une fourchette (49) portant, à son extrémité arrière, un doigt de verrouillage (53) pour un verrouillage sensiblement horizontal et ayant une forme de « L » avec une branche descendante (57,59) dans laquelle glisse un pion (61) fixé à une tringle (45) de renvoi entre les moyens de verrouillage avant et arrière.

5. Toit selon l'une des revendications précédentes, **caractérisé en ce que** lesdits mécanismes de verrouillage avant et arrière (21, 23) et leur/leurs actionneur/actionneurs (29) verrouillent en outre entre eux, dans ledit état plié, respectivement ladite partie avant de l'élément avant de toit (2) avec une deuxième partie (55) de la caisse (101) du véhicule située dans une zone de rangement du toit où lesdits éléments de toit (2,3,4) sont alors pliés, et soit ladite partie arrière ce même élément avant de toit (2) soit ladite partie avant desdits éléments latéraux de toit arrière (3a,3b) avec la caisse du véhicule, à proximité de ladite deuxième partie de cette caisse.

6. Toit selon l'une des revendications précédentes, **caractérisé en ce que** les mécanismes et moyens de verrouillage arrière (23) comprennent un organe de verrouillage monté pivotant (51) vers la partie arrière (2a) de l'élément de toit avant (2).

7. Toit selon la revendication 6, **caractérisé en ce que** l'organe de verrouillage (51) pivote par l'action d'une pièce (49,57) montée coulissante sur l'élément de toit avant (2).

8. Toit selon la revendication 7, **caractérisé en ce que** la pièce coulissante (49) est déplacée grâce a une prise de mouvement provenant de l'organe de verrouillage avant (21).

9. Toit selon l'une des revendications 6 à 8, **caractérisé en ce que** l'organe de verrouillage monté pivotant (51) présente un évidement (68) qui vient engager un doigt (69) solidaire d'un desdits éléments latéraux de toit arrière (3a,3b), lors du verrouillage.

10. Toit selon les revendications 4 et 7, ou 4 et 8, **caractérisé en ce que** ladite pièce montée coulissante (49) présente une extrémité (53) dont la forme vient s'engager avec un organe de verrouillage (75) de forme complémentaire solidaire de ladite deuxième partie (55) de la caisse (101).

11. Toit selon la revendication 5 ou les revendications 5 et, 7, 8 ou 10, **caractérisé en ce que** l'élément de toit avant (2) porte au voisinage des mécanismes de verrouillage arrière (23) une pièce proéminente (71) venant, vers la fin d'un mouvement de pliage du toit, en appui sur une surface de guidage (73) solidaire de ladite deuxième partie (55) de la caisse et permettant le positionnement du toit par rapport cette deuxième partie de la caisse, avant d'effectuer le verrouillage.

12. Toit selon la revendication 11, **caractérisé en ce que** le toit plié est posé sur la caisse par l'intermédiaire de la pièce proéminente (71).

13. Toit selon l'une des revendications précédentes, **caractérisé en ce que**, pour verrouiller l'élément de toit arrière central (4) avec chacun des éléments latéraux de toit arrière rigides (3a,3b), transversalement à ladite direction longitudinale et dans l'état déployé des éléments toit (2,3,4), cet élément de toit arrière central (4) et lesdits éléments latéraux de toit arrière rigides (3a,3b) comprennent respectivement des moyens complémentaires de verrouillage latéraux qui s'engagent naturellement les uns dans les autres et se verrouillent mutuellement de par le mouvement relatif dudit élément de toit arrière (4) central par rapport aux éléments latéraux (3a, 3b) de toit, vers la fin d'un mouvement de déploiement du toit.

14. Toit selon la revendication 13, **caractérisé en ce que** les moyens complémentaires de verrouillage sont constitués d'organes en forme de fourchette à deux dents (79) solidaires de l'un desdits d'éléments de toit (3a, 3b, 4) et d'au moins un doigt (81) solidaire de l'autre desdits éléments de toit (4, 3a, 3b), le doigt (81) venant s'insérer dans la fourchette vers la fin du mouvement de déploiement du toit.

15. Véhicule pourvu d'un toit mobile selon l'une des revendications précédentes.

## Claims

1. Movable roof on a vehicle, this roof having a front, a rear, and a longitudinal direction and comprising a rigid front roof element (2) and rigid lateral rear roof elements (3a, 3b), the latter being situated on either side of a rigid central rear roof element (4), this being the case when all the said roof elements (2, 3, 4) are in a deployed state, which roof elements can move between the said deployed state in which they extend above the cabin (5) of the vehicle and a folded state in which these roof elements (2, 3, 4) are arranged away from the top of the cabin, such as in a rear boot (6) of the vehicle, the front roof element (2) being articulated at each of the said rear lateral roof elements (3a, 3b) about a first transverse axis (7) and these rear lateral roof elements being articulated to the body of the vehicle about a second transverse axis (8), front and rear locking means (21, 23) and their actuator/actuators (29) being provided to lock together, respectively, a front portion of the front roof element (2) with a first front portion (25) of the body of the vehicle, and a rear portion of the said front roof element (2) with a front portion of the said rear lateral roof elements (3a, 3b), in the said deployed state, **characterized in that** the front roof element (2) contains the said front and rear locking mechanisms and means (21, 23) and their actuator/actuators (29), and the central rear roof element (4) is articulated to the rear edge of the front roof element (2) about a transverse axis (19).

2. Roof according to Claim 1, **characterized in that** the rear lateral elements (3a, 3b) of the roof are connected to one another transversely to the longitudinal axis (X) by a rear transverse roof element (3c), set up between the level of the rear boot cover (60, 61, 62a, 62b) and the central rear roof element (4), when the roof elements are in the deployed state (2, 3, 4), in order to define a rear roof unit element (3).

3. Roof according to Claim 2, **characterized in that** the set-up rear transverse element (3c) bears a rear window (30) for a rear view.

4. Roof according to one of the preceding claims, **characterized in that**:
- the front and rear locking means (21, 23) of the front roof element (2) each comprise a tilting hook (33, 51a), for locking in the deployed state,
- and/or the rear locking means (21, 23) of the front roof element (2) comprise a fork (49) bearing, at its rear end, a locking finger (53) for a substantially horizontal locking and having an "L" shape with a descending branch (57, 59) in which there slides a pin (61) fastened to a transmission rod (45) between the front and rear locking means.

5. Roof according to one of the preceding claims, **characterized in that** the said front and rear locking mechanisms (21, 23) and their actuator/actuators (29) additionally lock together, in the said folded state, respectively the said front portion of the front roof element (2) with a second portion (55) of the body (101) of the vehicle situated in a roof storage region in which the said roof elements (2, 3, 4) are then folded, and either the said rear portion of this same front roof element (2) or the said front portion of the said rear lateral roof elements (3a, 3b) with the body of the vehicle, in the vicinity of the said second portion of this body.

6. Roof according to one of the preceding claims, **characterized in that** the rear locking mechanisms and means (23) comprise a pivotally mounted locking member (51) towards the rear portion (2a) of the front roof element (2).

7. Roof according to Claim 6, **characterized in that** the locking member (51) pivots through the action of a part (49, 57) mounted slidably on the front roof element (2).

8. Roof according to Claim 7, **characterized in that** the sliding part (49) is moved by means of a movement action coming from the front locking member (21).

9. Roof according to one of Claims 6 to 8, **characterized in that** the pivotally mounted locking member (51) has a recess (68) which engages a finger (69) secured to one of the said rear lateral roof elements (3a, 3b) during the locking.

10. Roof according to Claims 4 and 7, or 4 and 8, **characterized in that** the said slidably mounted part (49) has an end (53) whose shape engages with a locking member (75) of complementary shape secured to the said second portion (55) of the body (101).

11. Roof according to Claim 5 or Claims 5 and 7, 8 or 10, **characterized in that** the front roof element (2) bears, in the vicinity of the rear locking mechanisms (23), a prominent part (71) which, towards the end of a folding movement of the roof, bears on a guide surface (73) secured to the said second portion (55) of the body and allowing the positioning of the roof with respect to the second portion of the body, before carrying out the locking.

12. Roof according to Claim 11, **characterized in that** the folded roof is placed on the body via the prominent part (71).

13. Roof according to one of the preceding claims, **characterized in that**, in order to lock the central rear roof element (4) with each of the rigid rear lateral roof elements (3a, 3b), transversely to the said longitudinal direction and with the roof elements (2, 3, 4) in the deployed state, this central rear roof element (4) and the said rigid rear lateral roof elements (3a, 3b) respectively comprise complementary lateral locking means which engage naturally in one another and lock mutually owing to the relative movement of the said central rear roof element (4) with respect to the lateral roof elements (3a, 3b), towards the end of a deployment movement of the roof.

14. Roof according to Claim 13, **characterized in that** the complementary locking means consist of members in the form of a fork with two teeth (79) secured to one of the said roof elements (3a, 3b, 4) and of at least one finger (81) secured to the other of the said roof elements (4, 3a, 3b), the finger (81) being inserted into the fork towards the end of the deployment movement of the roof.

15. Vehicle provided with a movable roof according to one of the preceding claims.

## Patentansprüche

1. Faltdach auf einem Fahrzeug, wobei das Dach eine Vorderseite, eine Hinterseite und eine Längsrichtung hat und ein starres vorderes Dachelement (2) und starre seitliche hintere Dachelemente (3a, 3b) aufweist, wobei die letzteren auf beiden Seiten eines starren mittleren hinteren Dachelements (4) wenigstens in einem entfalteten Zustand aller Dachelemente (2, 3, 4) angeordnet sind, die zwischen dem entfalteten Zustand, in dem sie sich über die Fahrgastzelle (5) des Fahrzeugs erstrecken, und einem gefalteten Zustand beweglich sind, in dem die Dachelemente (2, 3, 4) fern der Fahrgastzellenoberseite angeordnet sind, wie z.B. in einem Heckkofferraum (6) des Fahrzeugs, wobei das vordere Dachelement (2) über eine erste Querachse (7) mit jedem der seitlichen hinteren Dachelemente (3a, 3b) gelenkverbunden ist und die seitlichen hinteren Dachelemente über eine zweite Querachse (8) mit dem Fahrzeugaufbau gelenkverbunden sind, wobei vordere und hintere Verriegelungsmittel (21, 23) und deren Betätigungseinrichtung/Betätigungseinrichtungen (29) vorgesehen sind, um in dem entfalteten Zustand jeweils zwischen sich einen vorderen Abschnitt des vorderen Dachelements (2) mit einem ersten vorderen Abschnitt (25) des Fahrzeugaufbaus und einen hinteren Abschnitt des vorderen Dachelements (2) mit einem vorderen Abschnitt der seitlichen hinteren Dachelemente (3a, 3b) zu verriegeln,
**gekennzeichnet dadurch, dass** das vordere Dachelement (2) die vorderen und hinteren Verriegelungsmechanismen und -mittel (21, 23) und deren Betätigungseinrichtung/Betätigungseinrichtungen (29) enthält und das mittlere hintere Dachelement (4) am hinteren Rand des vorderen Dachelements (2) über eine Querachse (19) gelenkverbunden ist.

2. Dach nach Anspruch 1, **gekennzeichnet dadurch, dass** die seitlichen hinteren Dachelemente (3a, 3b) untereinander quer zur Längsachse (x) durch ein querverlaufendes hinteres Dachelement (3c) miteinander verbunden sind, das in dem entfalteten Zustand der Dachelemente (2, 3, 4) zwischen der Höhe der Heckkofferraumklappe (60, 61, 62a, 62b) und dem mittleren hinteren Dachelement (4) aufgestellt ist, so dass ein vereinheitlichendes hinteres Dachelement (3) festgelegt ist.

3. Dach nach Anspruch 2, **gekennzeichnet dadurch, dass** das aufgestellte querverlaufende hintere Dachelement (3c) eine Heckscheibe (30) zur freien Sicht nach hinten trägt.

4. Dach nach einem der vorangehenden Ansprüche, **gekennzeichnet dadurch, dass**:
- die vorderen und hinteren Verriegelungsmittel (21, 23) des vorderen Dachelements (2) jeweils einen Kipphaken (33, 51a) zur Verriegelung im entfalteten Zustand aufweisen,
- und/oder die hinteren Verriegelungsmittel (21, 23) des vorderen Dachelements (2) eine Gabel (49) aufweisen, die an deren hinterem Ende einen Verriegelungsausleger (53) für eine im Wesentlichen horizontale Verriegelung hat und eine L-Form mit einem absteigenden Ausläufer (57, 59) aufweist, in dem ein Führungsstück (61) gleitet, das an einer Zwischenleiste (45) zwischen den vorderen und den hinteren Verriegelungsmitteln befestigt ist.

5. Dach nach einem der vorangehenden Ansprüche, **gekennzeichnet dadurch, dass** die vorderen und hinteren Verriegelungsmittel (21, 23) und deren Betätigungseinrichtung/Betätigungseinrichtungen (29) darüber hinaus in dem gefalteten Zustand in der Nähe des zweiten Abschnitts des Fahrzeugaufbaus zwischen sich jeweils den vorderen Abschnitt des vorderen Dachelements (2) mit einem zweiten Abschnitt (55) des Fahrzeugaufbaus (101), der sich in einem Rangierbereich des Dachs befindet, in dem die Dachelemente (2, 3, 4) dann gefaltet sind, und entweder den hinteren Abschnitt desselben vorderen Dachelements (2) oder den vorderen Abschnitt der seitlichen hinteren Dachelemente (3a, 3b) mit dem Fahrzeugaufbau verriegeln.

6. Dach nach einem der vorangehenden Ansprüche, **gekennzeichnet dadurch, dass** die hinteren Verriegelungsmechanismen und -mittel (23) ein Verriegelungsglied (51) aufweisen, das gegenüber dem hinteren Abschnitt (2a) des vorderen Dachelements (2) schwenkbar montiert ist.

7. Dach nach Anspruch 6, **gekennzeichnet dadurch, dass** das Verriegelungsglied (51) durch die Betätigung eines Teils (49, 57) geschwenkt wird, das auf dem vorderen Dachelement (2) gleitend montiert ist.

8. Dach nach Anspruch 7, **gekennzeichnet dadurch, dass** das gleitende Teil (49) anhand einer Bewegungsübernahme des vorderen Verriegelungsglieds (21) versetzt wird.

9. Dach nach einem der Ansprüche 6 bis 8, **gekennzeichnet dadurch, dass** das schwenkbar montierte Verriegelungsglied (21) eine Aussparung (68) aufweist, die bei der Verriegelung mit einem Stift (69) in Eingriff kommt, der mit einem der seitlichen hinteren Dachelemente (3a, 3b) fest verbunden ist.

10. Dach nach einem der Ansprüche 4 und 7 oder 4 und 8, **gekennzeichnet dadurch, dass** das gleitend montierte Teil (49) ein Endstück (53) aufweist, dessen Form mit einem Verriegelungsglied (75) mit einer komplementären Form zusammenwirkt, das mit dem zweiten Abschnitt des Fahrzeugaufbaus (101) fest verbunden ist.

11. Dach nach Anspruch 5 oder nach einem der Ansprüche 5 und 7, 8 oder 10, **gekennzeichnet dadurch, dass** das vordere Dachelement (2) in der Nähe der hinteren Verriegelungsmechanismen (23) ein Vorsprungsteil (71) hat, das gegen Ende eine Faltbewegung des Dachs auf einer Oberfläche einer fest mit dem zweiten Abschnitt (55) des Fahrzeugaufbaus verbundenen Führung (73) in Anlage kommt und vor einem Bewirken der Verriegelung die Positionierung des Dachs bezüglich des zweiten Abschnitts des Fahrzeugaufbaus ermöglicht.

12. Dach nach Anspruch 11, **gekennzeichnet dadurch, dass** das gefaltete Dach unter Verwendung des Vorsprungsteils (71) auf den Fahrzeugaufbau versetzt wird.

13. Dach nach einem der vorangehenden Ansprüche, **gekennzeichnet dadurch, dass** zum Verriegeln des mittleren hinteren Dachelements (4) mit jedem der starren seitlichen hinteren Dachelemente (3a, 3b) quer zur Längsrichtung und in dem entfalteten Zustand der Dachelemente (2, 3, 4) das mittlere hintere Dachelement (4) und die starren seitlichen hinteren Dachelemente (3a, 3b) jeweils komplementäre Mittel zur seitlichen Verriegelung aufweisen, die gegen Ende der Entfaltbewegung des Dachs naturgemäß die einen mit den anderen in Eingriff bringen und sich durch die Relativbewegung des mittleren hinteren Dachelements (4) bezüglich der seitlichen Dachelemente (3a, 3b) gegenseitig verriegeln.

14. Dach nach Anspruch 13, **gekennzeichnet dadurch, dass** die komplementären Verriegelungsmittel aus Gliedern in Form von mit einem der Dachelemente (3a, 3b, 4) fest verbundenen Gabeln mit zwei Zacken (79) und aus mindestens einem Stift (81) bestehen, der mit dem anderen der Dachelemente (4, 3a, 3b) fest verbunden ist, wobei der Stift (81) gegen Ende der Entfaltbewegung des Dachs in die Gabel einrückt.

15. Fahrzeug mit einem Faltdach nach einem der vorangehenden Ansprüche.
